# EUROPÄISCHE PATENTSCHRIFT

(11) **EP 0 261 150 B1**
(45) Veröffentlichungstag und Bekanntmachung des Hinweises auf die Patenterteilung: **25.08.1993**
(21) Anmeldenummer: 87901310.0
(22) Anmeldetag: 13.02.1987
(51) Int. Cl.: F16B 12/20

(54) **BESCHLAG ZUM LÖSBAREN VERBINDEN VON ZWEI BAUTEILEN**
FITTING FOR DISMOUNTABLE CONNECTION OF TWO CONSTRUCTION ELEMENTS
FERRURE SERVANT A L'ASSEMBLAGE MOBILE DE DEUX ELEMENTS DE CONSTRUCTION

(30) Priorität: 13.03.1986 AT 667/86
(43) Veröffentlichungstag der Anmeldung: 30.03.1988
(73) Patentinhaber: FRIEDRICH KNAPP GESELLSCHAFT M.B.H., A-3300 Amstetten (AT)
(72) Erfinder: KNAPP, Friedrich, A-3300 Amstetten (AT)
(74) Vertreter: Weinzinger, Arnulf, Dipl.-Ing.
(86) Internationale Anmeldenummer: AT8700009
(87) Internationale Veröffentlichungsnummer: WO8705671

(56) Entgegenhaltungen:
- AT-C- 373 046
- DE-A- 2 932 469
- FR-A- 2 384 150
- GB-A- 759 545

## Beschreibung

Die Erfindung bezieht sich auf einen Beschlag zum Verbinden zweier Bauteile, insbesondere Holzelemente, mit zwei im wesentlichen fischbauchartig ausgebildeten, in entsprechende Nuten der Bauteile einbringbaren und darin befestigbaren Beschlagteilen, welche an ihren Seitenflächen harpunenartige Stege aufweisen und außerdem miteinander in Eingriff bringbare Hakenköpfe tragen, die an Zungen seitlich abstehend vorgesehen sind, von denen jeweils eine an der beim Verbinden dem anderen Beschlagteil zugewandten Seite der Beschlagteile angeformt ist, wobei die Hakenköpfe der beiden miteinander zusammenwirkenden Beschlagteile gleich ausgebildet sind und in der Verbindungslage einander hintergreifen.

Ein Beschlag vorgenannter Art ist in der AT-PS 373 046 beschrieben. Bei diesem bekannten Beschlag ist an der Zunge der Beschlagteile je ein Hakenkopf vorgesehen, und es ist die Stabilität der Verbindung durch die mit einem solchen seitlichen oder pfeilförmigen Hakenkopf erzielbare Haltekraft begrenzt. Außerdem ist bei diesem bekannten Beschlag der Hakenkopf an den Enden abgerundet ausgebildet, und es kann dadurch beim Zusammenfügen der Beschlagteile eine punktförmige Berührung auftreten, welche hohe Reibungskräfte verursachen kann, so daß es beim Zusammenfügungsvorgang der Beschlagteile zu Klemmerscheinungen kommen kann. Ähnliche Schwierigkeiten bzw. Nachteile können sich bei einem aus der CH-PS 616 993 bekannten Beschlag ergeben, der sich vom vorgenannten bekannten Beschlag dahingehend unterscheidet, daß sich die Hakenköpfe im wesentlichen der Flächenerstreckung der Beschlagteile folgend nach einer Seite hin erstrecken, wobei jeder Beschlagteil mit einem solchen Hakenkopf ausgestattet ist und die Hakenköpfe dadurch, daß zwei gleich ausgebildete Beschlagteile in um 180° gegeneinander versetzter Stellung zusammengefügt werden, miteinander in Eingriff kommen.

Es ist ein Ziel der vorliegenden Erfindung, einen Beschlag eingangs erwähnter Art zu schaffen, bei dem die Schwierigkeiten und Nachteile, welche bei bekannten Beschlägen dieser Art auftreten, behoben sind und ein verbesserter Zusammenhalt der Beschlagteile erhalten werden kann.

Der erfindungsgemäße Beschlag eingangs erwähnter Art ist dadurch gekennzeichnet, daß an jedem der beiden Beschlagteile des Beschlages zwei auf einer Seite der Zunge seitlich nebeneinander angeordnete Hakenköpfe vorgesehen sind, die jeweils eine beidseitig schräg auslaufende Verhakungsfläche aufweisen und deren Abstand mindestens einer Hakenkopflänge entspricht. Durch die erfindunggemäße Ausbildung des Berschlages kann der vorstehend angeführten Zielsetzung gut entsprochen werden, und es wird außer einem verbesserten Zusammenhalt der Beschlagteile im zusammengefügten Zustand durch die sich aus dem Vorsehen von mindestens zwei Hakenköpfen an jeder Zunge ergebende größere Zungenbreite auch eine größere Überlappungsbreite bzw. Überlappungsflache der beiden Zungen eines Paares von miteinander zusammenwirkenden Beschlagteilen erzielt und damit auch beim Zusammenfügungsvorgang eine bessere Führung der beiden Beschlagteile zueinander erreicht.

Es ist zur exakten gegenseitigen Positionierung je zweier miteinander zusammenwirkender Beschlagteile, welche miteinander einen Beschlag bilden, von Vorteil, wenn man vorsieht, daß in Zusammensteckrichtung der beiden Beschlagteile eines Beschlages gesehen im unmittelbar nach den Hakenköpfen der Beschlagteile gelegenen Bereich, in dem in der Verbindungslage der beiden miteinander zusammenwirkenden Beschlagteile die Hakenköpfe des jeweils anderen Beschlagteiles zu liegen kommen, in bezug auf die Hakenköpfe seitlich versetzt, biegsame oder bewegliche Verriegelungslaschen vorgesehen sind, die je für einen Hakenkopf des jeweils anderen Beschlagteiles einen seitlichen Anschlag bilden. Die erwähnten Verriegelungslaschen können nach Bedarf ausgebogen bzw. aus der Oberfläche der Beschlagteile herausbewegt werden, so daß dann je nach Wunsch das seitliche Verschieben des einen Beschlagteiles in bezug auf den anderen Beschlagteil eines Beschlages nach der einen oder nach der anderen Seite begrenzt werden kann. Für die Anbringung der Beschlagteile an den miteinander zu verbindenden Bauteilen siaht man in der Regel Nuten vor, in die die Besahlagteile eingefügt werden; mit Vorteil können Nuten mit kreisrundem Verlauf des Nutengrundes, dar der Außenkontur der Besahlagteile angepaßt ist und mit einer insbesondere bei Tischlern weit verbreiteten Nutfräse hergestellt werden kann, vorgesehen werden. In solchen Nuten finden die Beschlagteile durch die harpunenartigen Stege, die an den Seitenflächen der Besahlagteile vorgesehen sind, guten Halt. In der Regal wird dabei zur Unterstützung der Verankerung der Beschlagteile in den Nuten in die Nuten Leim oder ein anderes klebemittel eingebracht. Um die Verankerung weiter zu verbessern, sind gemäß einer vorteilhaften Ausbildung des erfindungsgemäßen Beschlages an den seitlichen Enden der Beschlagteile an der die Zunge aufweisendan Seite Abstufungen vorgesehen. Man kann so die Beschlagteile zusätzlich mit Schrauben fixieren, welche neben den Beschlagteilen an den Enden derselben in die zu verbindenden Bauteile eingeschraubt werden und mit der Unterseite ihrer Köpfe an den genannten Abstufungen der Beschlagteile zum Anliegen kommen. Es ist dabei für das Montieren der Beschlagteile vorteilhaft, wenn an der von der Zunge ahgewandten Seite der Beschlagteile am Rand derselben Spitzen vorgesehen sind, weil beim Einfügen der Beschlagteile in die Bauteile durch diese Spitzen auf sehr einfache Weise eine Positionierung erzielt werden kann, welche die Lage der Besahlagteile in den Bauteilen sichert, bis die Schrauben- und/oder Leimbefestigung voll zum Tragen kommt.

Die Erfindung wird nun nachstehend unter Bezugnahme auf Beispiele, welche in den Zeichnungen schematisch dargestellt sind, weiter erläutert; die Erfindung ist nicht auf die in dar Zeichnung dargestellten Beispiele bescränkt.

In den Zeichnungen zeigen:
Die Fig. 1 und 2 zwei miteinander eine Ausführungsform eines erfindungsgamäßen Beschlages bildende Beschlagteile, welche in miteinander zu verbindende Bauteile eingefügt sind, wobei Fig. 1 eine teilweise aufgeschnittene Rückansicht, und Fig. 2 eine teilweise aufgebrochene Vorderansicht der in genutete Platten eingesetzten Beschlagteile zeigt.
Fig. 3 zeigt einen Schnitt gamäß der Linie I-I in Fig. 1, und
Fig. 4 zeigt einen Schnitt gemäß der Linie II-II in Fig. 2.
Die Fig. 5 bis 9 zeigen verschiedene Anschlagmöglichkeiten eines erfindungsgemäßen Beschlages anhand von Platten, die mit einem solchen Beschlag zusammengefügt sind, wobei diese Figuren teilweise aufgeschnittene Seitenansichten, auf die Stirnkanten der Platten gesehen, beinhalten.
Fig. 10 zeigt einen erfindungsgemäß ausgebildeten Beschlagteil in Vorderansicht;
Fig. 11 diesen Beschlagteil in einem Schnitt gemäß der Linie III-III von Fig. 10; und
Fig. 12 diesen Beschlagteil in Draufsicht.
Fig. 13 zeigt einen erfindungsgemäß ausgebildeten Beschlag, bei dem sich zwei identisch ausgebildete Beschlagteile in miteiannder verhakter und verriegelter Stellung befinden;
Fig. 14 zeigt diesen Beschlag in einem Schnitt gemäß der Linie IV-IV in Fig. 13.

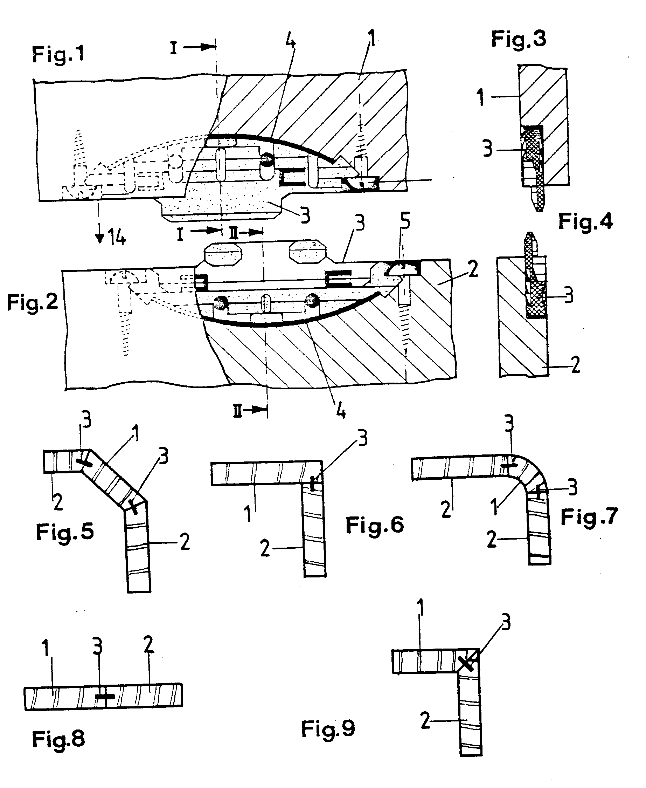

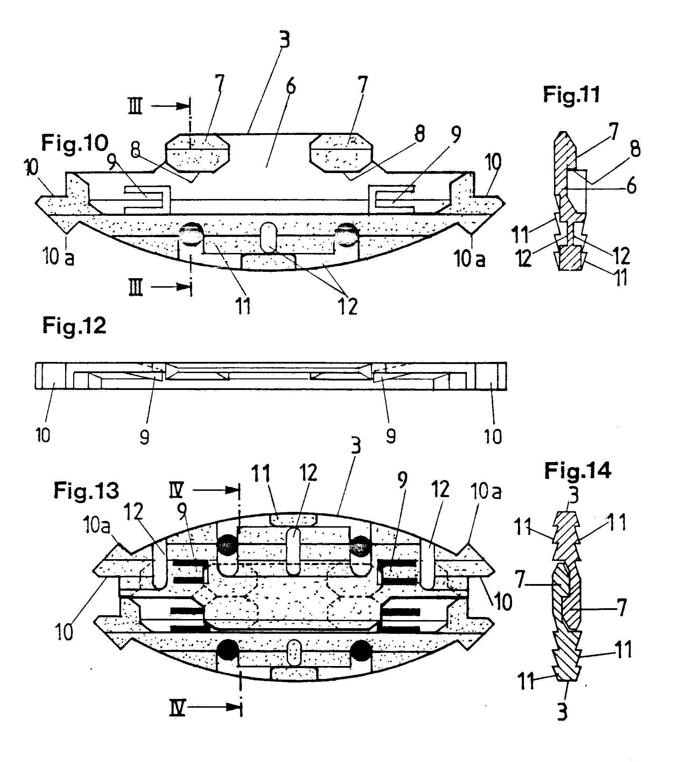

In der Zeichnung zeigen die Fig. 1 und 3 einen in einen Bauteil 1 eingesetzten Beschlagteil 3, und die Fig. 2 und 4 einen gleich ausgebildeten Beschlagteil 3, der in um 180° gewendeter Lage in einen zweiten Bauteil 2 eingefügt ist. Zur Aufnahme der Beschlagteile 3 sind in den Bauteilen 1, 2 annähernd halbkreisförmige Nuten vorgesehen. Die Bauteile 1, 2 sind im dargestellten Fall Platten. Ein solcher Beschlagteil 3 ist in größerem Maßstab in den Fig. 10, 11 und 12 dargestellt, und es zeigen die Fig. 13 und 14 einen aus zwei solchen Beschlagteilen zusammengefügten Beschlag.

Die Beschlagteile 3 weisen je eine Zunge 6 auf, auf der mindestens zwei Hakenköpfe 7 abstehend angeordnet sind. Die Hakenköpfe sind dabei seitlich nebeneinander in einem Abstand plaziert, der mindestens einer Hakenkopflänge entspricht. Die Hakenköpfe 7 weisen eine beidseitig schräg auslaufende Verhakungsfläche 8 auf, so daß sich beim Zusammenfügen zweier Beschlagteile, bei dem die Hakenköpfe in gegenseitigen Eingriff gebracht werden, durch den Flächenkontakt an den schräg auslaufenden Verhakungsflächen eine leichtgängige Verschiebbarkeit ergibt.

Die Beschlagteile 3 weisen Verriegelungslaschen 9 auf, welche, wie in Fig. 12 dargestellt ist, aus der Zunge 6 herausgebogen werden können, um einen Anschlag für einen Hakenkopf eines mit diesem Beschlagteil zusammenarbeitenden zweiten Beschlagteiles zu bilden. In Zusammensteckrichtung 14 der beiden Beschlagteile eines Beschlages gesehen liegen die Verriegelungslaschen 9 im unmittelbar nach den Hakenköpfen 7 der Beschlagteile 3 gelegenen Bereich in bezug auf die Hakenköpfe 7 seitlich varsetzt und bilden so die erwähnten seitlichen Anschläge, die mit Hakenköpfen zusammenwirken und damit die gegenseitige Lage zweier Beschlagteile 3 in seitlicher Richtung festlegen.

An den seitlichen Enden der Beschlagteile 3 sind an dar die Zunge 6 aufweisenden Seite dieser Beschlagteile Abstufungen 10 vorgesehen. An diesen Abstufungen können Schrauben 5, die in dem in den Fig. 1 bis 4 dargestellten Fall als Rundkopfschrauban ausgebildet sind, welche in die miteinander zu verbindenden Bauteile 1, 2 eingeschraubt sind, mit der Unterseite ihrer köpfe zur Anlage kommen, und es wird so ein besonders sicherer Sitz der Beschlagteile 3 in den Bauteilen 1, 2 gewährleistet. Weiter sind zur Fixierung der Beschlagteile 3 in den Bauteilen 1, 2 an den Seitenflächen dar Beschlagteile 3 harpunenartige Stege 11 und Leimkanäle 12 vorgesehen, wobei die Stege 11 unmittelbar und in Zusammenwirken mit in die Nuten 4 eingebrachtem Leim die Verankerung der Beschlagteile an den Nutwänden verstärken und die Leimkanäle 12 eine gleichmäßige Verteilung des in die Nuten 4 in den Bauteilen 1, 2 eingebrachten Leimes beim Einsetzen dar Beschlagteile 3 bewirken bzw. begünstigen. Um gleich beim Einsetzen der Beschlagteile 3 in die Bauteile 1, 2 die Lage dieser Bauteile festzulegen, bis die Leimverbindung bzw. die Schrauben 5 für einen festen Halt sorgen können, kann man vorteilhaft an der von der Zunge 6 abgewandten Seite der Beschlagteile am Rand derselben Spitzen 10a vorsehen, wie sie in der Zeichnung in Bereich der Abstufungen 10 eingezeichnet sind. Man kann aber auch ohne derartige Spitzen das Auslangen finden, in welchem Fall dann z.B. der Rand der Beschlagteile 3 durchgehend bis zu den Enden kreisbogenförmig verlaufend ausgebildet sein kann.

Die Verriegelungslaschen 9 können gewünschtenfalls auch beweglich ausgebildet sein.

Die Fig. 5 bis 9 verdeutlichen vielfältige Möglichkeiten für das Zusammenfügen von Bauteilen 1, 2 mit erfindungsgemäß ausgebildeten Beschlägen, deren beide Beschlagteile je in einen der beiden miteinander zu verbindenden Bauteile eingesetzt und miteinander zusammengefügt werden.

## Patentansprüche

1. Beschlag zum Verbinden zweier Bauteile, insbesondere Holzelemente, mit zwei im wesentlichen fischbauchartig ausgebildeten, in entsprechende Nuten der Bauteile (1, 2) einbringbaren und darin befestigbaren Beschlagteilen (3), welche an ihren Seitenflächen harpunenartige Stege (11) aufweisen und außerdem miteinander in Eingriff bringbare Hakenköpfe (7) tragen, die an Zungen (6) seitlich abstehend vorgesehen sind, von denen jeweils eine an der beim Verbinden dem anderen Beschlagteil zugewandten Seite der Beschlagteile angeformt ist, wobei die Hakenköpfe (7) der beiden miteinander zusammenwirkenden Beschlagteile gleich ausgebildet sind und in der Verbindungslage einander hintergreifen, dadurch gekennzeichnet, daß an jedem der beiden Beschlagteile (3) des Beschlages zwei auf einer Seite der Zunge (6) seitlich nebeneinander angeordnete Hakenköpfe vorgesehen sind, die jeweils eine beidseitig schräg auslaufende Verhakungsfläche (8) aufweisen und deren Abstand mindestens einer Hakenkopflänge entspricht.

2. Beschlag nach Anspruch 1, dadurch gekennzeichnet, daß in Zusammensteckrichtung der beiden Beschlagteile eines Beschlages gesehen im unmittelbar nach den Hakenköpfen (7) der Beschlagteile (3) gelegenen Bereich, in dem in der Verbindungslage der beiden miteinander zuammenwirkenden Beschlagteile (3) die Hakenköpfe (7) des jeweils anderen Beschlagteiles zu liegen kommen, in bezug auf die Hakenköpfe (7) seitlich versetzt, biegsame oder bewegliche Verriegelungslaschen (9) vorgesehen sind, die je für einen Hakenkopf (7) des jewels anderen Beschlagteiles (3) einen seitlichen Anschlag bilden.

3. Beschlag nach Anspruch 1 oder 2, dadurch gekennzeichnet, daß an den seitlichen Enden der Beschlagteile (3) an der die Zunge (6) aufweisenden Seite Abstufungen (10) vorgesehen sind.

4. Beschlag nach einem der Ansprüche 1 bis 3, dadurch gekennzeichnet, daß an der von der Zunge (6) abgewandten Seite der Beschlagteile (3) am Rand derselben Spitzen vorgesehen sind.

## Claims

1. Fitting for the assemblage of two structural parts, in particular wooden elements, comprising two substantially fishbellied fitting parts (3) adapted to be inserted into corresponding grooves of the structural parts (1, 2) and fastened therein, which fitting parts include harpoon-like webs (11) on their side faces and, furthermore, hook heads (7) engageable in each other and provided on tongues (6) in a laterally projecting manner, one of which is each moulded on the fitting part on its side facing the other fitting part when assembled, wherein the hook heads (7) of the two cooperating fitting parts are equally designed and engage each other from behind in the assembled position, characterized in that two hook heads are provided on each of the two fitting parts (3) of the fitting laterally beside each other on one side of the tongue (6), each having an interlocking surface (8) obliquely terminating on either side and their distance corresponding to at least the length of one hook head.

2. A fitting according to claim 1, characterized in that flexible or movable locking brackets (9) are provided laterally offset relative to the hook heads (7) in the region immediately following the hook heads (7) of the fitting parts (3), seen in the assembling direction of the two fitting parts of a fitting, in which region the hook heads (7) of the respective other fitting part come to lie in the assembled position of the two cooperating fitting parts (3), said locking brackets each constituting a lateral stop for a hook head (7) of the respective other fitting part (3).

3. A fitting according to claim 1 or 2, characterized in that steps (10) are provided on the lateral ends of the fitting parts (3) on the side including the tongue (6).

4. A fitting according to any one of claims 1 to 3, characterized in that tips are provided on the edges of the fitting parts (3) on the side facing away from the tongue (6).

## Revendications

1. Ferrure pour assembler deux éléments de construction, en particulier des éléments en bois, comportant deux parties de ferrure (3) de forme en substance lenticulaire, pouvant être insérées dans des rainures correspondantes des éléments de construction (1, 2) et y être fixées, présentant sur leurs faces latérales des nervures du genre harpon (11) et portant, en outre, des têtes à crochet (7) pouvant être amenées en prise l'une avec l'autre, qui sont prévues latéralement en saillie sur des languettes (6) et qui sont chacune formées du côté de la partie de ferrure tourné vers l'autre partie de ferrure, lors de l'assemblage, les têtes à crochet (7) des deux parties de ferrure qui coopérent l'une avec l'autre étant de même configuration et s'engageant l'une derrière l'autre dans la position assemblée, caractérisée en ce que, sur chacune des deux parties (3) de la ferrure sont prévues deux têtes à crochet disposées l'une à côté de l'autre, latéralement d'un côté de la languette (6), ces têtes présentant chacune une surface d'accrochage (8) se terminant à ses deux extrémités par des biseaux et dont l'espacement correspond à au moins une longueur de tête à crochet.

2. Ferrure suivant la revendication 1, caractérisée en ce que, dans la direction d'emboîtement des deux parties de ferrure et, dans les zones directement adjacentes aux têtes à crochet (7) des parties de ferrure (3) dans lesquelles, dans la position d'assemblage des deux parties de ferrure (3) coopérant l'une avec l'autre, la tête à crochet de chacune des deux parties de ferrure vient chaque fois se placer, sont prévues, décalées latéralement par rapport aux têtes à crochet (7), des oreilles de verrouillage flexibles ou mobiles (9) qui forment chacune une butée latérale pour la tête à crochet (7) de chacune des deux parties de ferrure (3).

3. Ferrure suivant la revendication 1 ou 2, caractérisée en ce qu'aux extrémités latérales des parties de ferrure (3), du côté présentant la languette (6), sont prévus des épaulements (10).

4. Ferrure suivant l'une quelconque des revendications 1 à 3, caractérisée en ce que, du côté des parties de ferrure (3) opposé à la languette (6), au bord de ces parties de ferrure, sont prévus des picots.
